# EUROPÄISCHE PATENTSCHRIFT

(11) **EP 2 564 081 B1**
(45) Veröffentlichungstag und Bekanntmachung des Hinweises auf die Patenterteilung: **21.01.2015**
(21) Anmeldenummer: 11752459.5
(22) Anmeldetag: 27.04.2011
(51) Int. Cl.: F16C 7/02, B29C 70/76, B29C 70/86

(54) **ZUG-DRUCK-STANGE AUS KOHLENSTOFFFASERVERSTÄRKTEM KUNSTSTOFF**
CARBON FIBER REINFORCED PLASTIC PUSH/PULL ROD
TIGE DE TRACTION-COMPRESSION EN PLASTIQUE RENFORCÉ PAR DES FIBRES DE CARBONE

(30) Priorität: 30.04.2010 DE 202010006303 U
(43) Veröffentlichungstag der Anmeldung: 06.03.2013
(73) Patentinhaber: GMT Gummi-Metall-Technik GmbH, 77815 Bühl (DE)
(72) Erfinder: UHL, Albert, 77815 Bühl (DE)
(74) Vertreter: Miller, Andreas
(86) Internationale Anmeldenummer: PCT/EP2011/002095
(87) Internationale Veröffentlichungsnummer: WO 2011/134644

(56) Entgegenhaltungen:
- FR-A3- 2 645 070
- JP-A- 58 193 922
- JP-A- 59 050 216
- US-A- 4 469 730
- US-A1- 2008 129 041

## Beschreibung

Die Erfindung betrifft eine Zug-Druck-Stange zur Führung und mechanischer Lagerung im Flugzeugbau. Anwendungen im Maschinen- und Fahrzeugbau sind ebenfalls möglich.

Derartige Zug-Druck-Stangen bestehen in der Regel aus einem im Wesentlichen rohrförmigen Körper, an dessen beiderseitigen Ende sich je ein Adapter zur Montage der Zug-Druck-Stange befindet. Derartige Zug-Druck-Stangen dienen zur Übertragung von einerseits Zuglasten und andererseits von Drucklasten. In der Regel wird diese Art von Rohrkörpern aus metallischen Werkstoffen wie insbesondere Edelstahl, Aluminium und Titan gefertigt. Diese Materialien haben jedoch vor allem im Flugzeugbau den Nachteil eines zu hohen Gewichts, was den Vorteil dieser metallischen Rohrkörper, gegen äußere Beschädigungen wenig empfindlich zu sein, relativiert. Es bietet sich daher an, für insbesondere im Flugzeugbau eingesetzte Zug-Druck-Stangen leichtere Werkstoffe wie etwa kohlenstofffaserverstärkte Kunststoffe (im folgenden CFK) zu verwenden. Zwar sind bereits Zug-Druck-Stangen bekannt, die aus CFK hergestellt sind. Diese bestehen aber ausschließlich aus einschaligen Rohrkörpern mit direkter gradliniger Anbindung an den Adapter, ein Aufbau, der den Anforderungen der Flugzeugindustrie aber nur bedingt gerecht wird. So verlangen die in der Flugzeugindustrie üblichen strengen Prüfriühtlinien, dass Zug-Druck-Stangen auch bei äußeren Beschädigungen noch ihren Zweck erfüllen und sowohl Zug- als auch Drucklasten im geforderten Maße übertragen, was aber einschalige CFK-Rohrkörper nur durch Überdimensionierung erfüllen können. Dies hat aber den Nachteil eines wiederum erhöhten Gewichts.

Eine zweischalige, dem Oberbegriff des Anspruchs 1 entsprechende CFK Zug-Druck-Stange ist aus US 2008/01299041 A1 bekannt.

Aufgabe der Erfindung war es daher, einen Materialverbund und einen Aufbau für Zug-Druck-Stangen zu finden, die das Problem des hohen Gewichts überwinden, aber trotzdem gegen äußere Beschädigung (Impact) unempfindlich sind und insbesondere aber auch bei erfolgter äußerer Beschädigung (Impact) die nahezu gleichbleibende Stabilität und Funktion der Zug-Druck-Stangen, Kräfte zu übertragen, sowohl in Zug- als auch in Druckrichtung beibehalten. Diese Aufgabe wurde erfindungsgemäß wie folgt gelöst:

Bei Belastbarkeits-Versuchen hat sich herausgestellt, dass bei einem durch Impact beschädigten CFK-Rohrkörper die Fähigkeit, Zuglasten zu übernehmen, kaum beeinflusst wird, hingegen aber die Fähigkeit, Drucklasten zu übernehmen, sich sehr stark verringert. Daher sind die druckbelasteten Teile des Rohrkörpers vor Impact besonders zu schützen, wobei sich überraschend zur Lösung dieser Aufgabe folgender, von den an sich bekannten einschichtigen Rohrkörpern von Zug-Druck-Stangen aus CFK abweichender, mehrschichtiger Aufbau als äußerst vorteilhaft erwies:

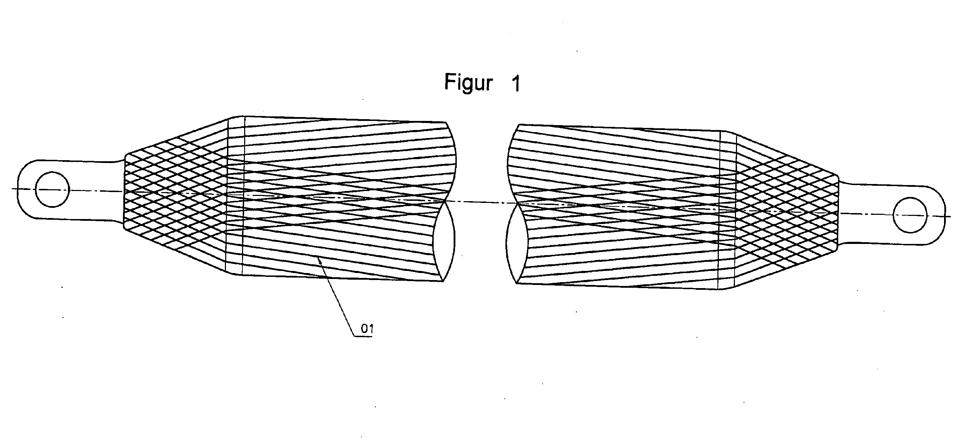

Figur 1 zeigt den CFK-Rohrkörper in, der Gesamtsicht.

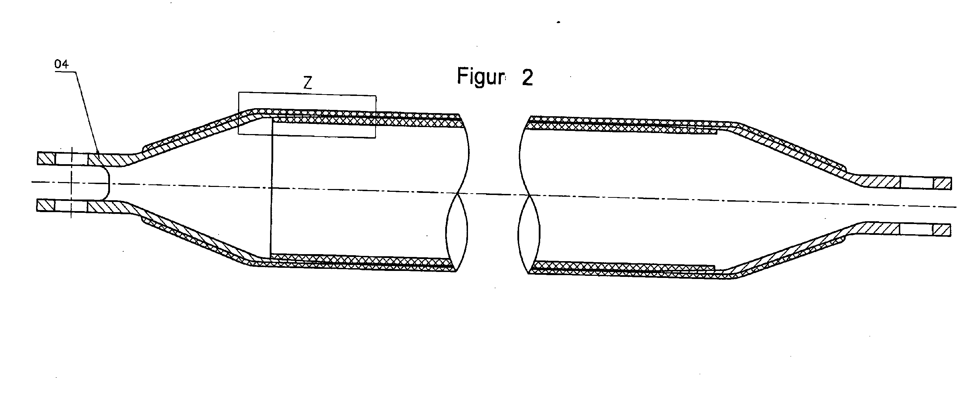

Figur 2 zeigt den CFK-Rohrkörper im Längsschnitt;
Figur 3 zeigt die Einzelheit Z aus Figur 2.

Wie in Figur (2) ersichtlich besteht der Rohrkörper der erfindungsgemäßen Zug-Druck-Stange aus zwei CFK-Röhren, nämlich einer außen liegenden Röhre (1) und einer innen liegenden Röhre (2), die auf folgende Weise mit dem metallischen Ansatzstück des Adapters (4) (vorzugsweise ein Gabelende, Gewindehülse oder ein anderes bei solchen Adaptern übliches Endstück) verbunden werden.

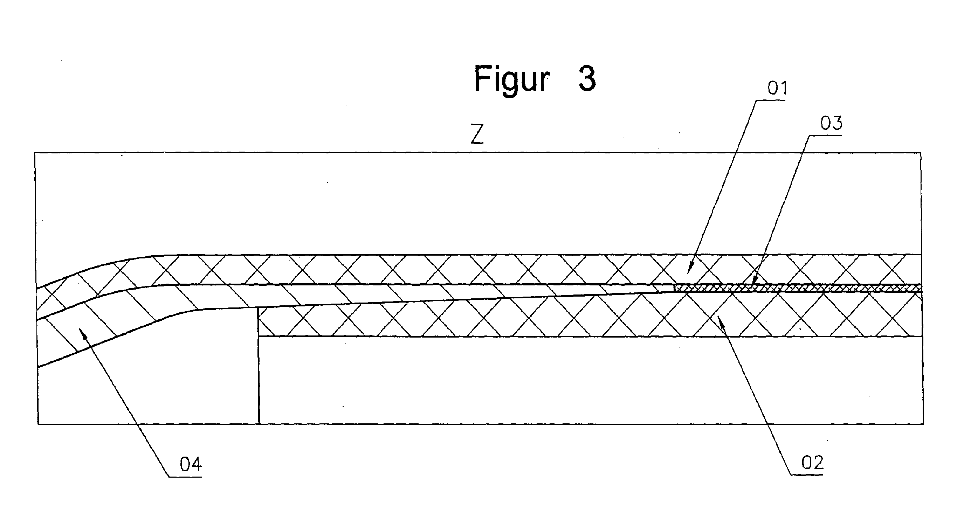

Die Detailansicht der Figur 3 verdeutlicht den Schichtaufbau

Die außen und innen liegenden CFK-Rohrkörper (1) und (2) werden mit dem metallischen Ende des Adapters (4) formschlüssig so miteinander verbunden, dass der äußere CFK-Rohrkörper (1) als konisch zulaufende Röhre über dem metallischen Ansatz des Adapters (4) angebracht wird, während der innen liegende CFK-Rohrkörper (2) als innere Röhre unter den metallischen Enden des Adapters angeordnet wird. Der äußere CFK-Rohrkörper (1) dient dabei der Übertragung der Zuglasten, während der innere CFK-Rohrkörper (2) für die Übertragung der Drucklasten bestimmt ist. Erreicht wird diese nach Zug und Druck getrennte Übertragung durch die konische Fläche zwischen dem CFK-Rohrkörper (1) und dem metallischen Ende des Adapters. Diese konischen Flächen zwischen dem metallischen Ende (4) und dem äußeren CFK-Rohrkörper (1) nehmen die durch Zug entstehenden Kräfte auf, während der innere CFK-Rohrkörper (2) den Druck übernimmt. Da sich jedoch erfahrungsgemäß Beschädigungen des CFK-Rohrkörpers bei Drucklasten stärker auf die Fähigkeit, Kräfte zu übertragen bzw. aufzunehmen, auswirken als dies bei der Übertragung von Zuglasten der Fall ist, ist es erforderlich, die druckbelasteten Teile der Zug-Druck-Stange, also den inneren CFK-Rohrkörper (2), besonders zu schützen. Dies geschieht dadurch, dass die außen bzw. innen liegenden CFK-Rohrkörper (1) und (2) durch eine dünne Elastomerschicht (3) voneinander getrennt werden. Hierdurch wird erreicht, dass der innen liegende CFK-Rohrkörper (2) gegen Beschädigungen durch Einwirkung von außen (Impact) geschützt wird.

Sollten die metallischen Enden der Adapter aus Aluminium bestehen, so müssen diese zur Vermeidung von Korrosion gegen die beiden CFK-Rohrkörper mittels einer Glasfaserlage (GFK) isoliert werden.

Als Material für die Rohrkörper wurde ein Verbund aus CFK und Elastomer verwendet. Hier können für den druckbelasteten Teil des inneren CFK-Rohrkörpers (2) nass oder prepreg (vorimprägnierte Fasern) gewickelte, pultrudiert oder im duromeren oder thermoplastischen RTM- Verfahren hergestellte Rohre zum Einsatz kommen. Für den zugbelasteten äußeren CFK-Rohrkörpers (1) kommt konstruktionsbedingt nur das nass oder prepreg Wickelverfahren zum Einsatz.
Für den Elastomer wird vorzugweise Silicongummi verwendet.

Die Herstellung der erfindungsgemäßen CFK-Zug-Druck-Stange geschieht vorzugweise in folgenden Schritten in dieser Reihenfolge:

Zunächst wird der innere CFK-Rohrkörper (2) nass oder prepreg (vorimprägnierte Fasern) gewickelt, pultrudiert oder im duromeren oder thermoplastischen RTM-Verfahren hergestellt. Danach wird die Elastomerschicht (3) auf den CFK-Rohrkörper (2) aufvulkänisiert. Es folgt das Aufsetzen und das Ausrichten des Metallendes (4) und danach die Herstellung und Anbringung des äußeren CFK-Rohrkörpers (1) im nass oder prepreg Wickelverfahren unter Einwicklung des Metallendes des Adapters.

### Bezugszeichenliste:

- 1: Äußerer Rohrkörper
- 2: Innerer Rohrkörper
- 3: Elastomerschicht
- 4: Adapter

## Patentansprüche

1. Zug-Druck-Stange bestehend aus mindestens einem Adapter (4) mit metallischem rohrförmigem Ende und je einem innen und einem außen liegenden Rohrkörper aus kohlenstofffaserverstärktem Kunststoff (CFK), wobei der außen liegende CFK-Rohrkörper (1) das metallische Ende des Adapters (4) von außen formschlüssig konisch umfasst und der innen liegende CFK-Rohrkörper (2) mit den metallischen Enden des Adapters (4) formschlüssig von innen verbunden ist, **dadurch gekennzeichnet, dass** der innen liegende CFK-Rohrkörper (2) im Berührungsbereich mit dem außen liegenden CFK-Rohrkörper (1) mit einer Gummischicht (3) auf der Außenseite überzogen ist und somit zwischen dem innen liegenden CFK-Rohrkörper (2) und der Innenseite des außen liegenden CFK-Rohrkörpers (1) trennend, schützend und dämpfend angeordnet ist.

## Claims

1. A draw-pull bar comprising at least one adapter (4) having a metallic tubular end and an inner and outer tubular body respectively made of carbon-fibre-reinforced plastic (CFRP), wherein the outer CFRP tubular body (1) conically wraps the metal end of the adapter (4) from the outside in a form-fit manner and the inner CFRP tubular body (2) is connected to the metal ends of the adapter (4) from the inside in a form-fit manner, **characterised in that** the inner CFRP tubular body (2) is cladded, in a contact area with the outer CFRP tubular body (1), with a rubber layer (3) on the outside, which is thus located between the inner CFRP tubular body (2) and the inside of the outer CFRP body (1), separating them and providing thereby protection and insulation.

## Revendications

1. Barre de traction/compression composée d'au moins un adaptateur (4) avec extrémité métallique en forme de tuyau et respectivement un corps tubulaire en plastique renforcé en fibres de carbone (CFC) à l'intérieur et à l'extérieur, le corps tubulaire en CFC extérieur (1) embrassant l'extrémité de l'adaptateur de manière conique de l'extérieur et le corps tubulaire en CFC intérieur (2) étant relié aux extrémités métalliques de l'adaptateur (4) de l'intérieur, se démarquant par le fait que le corps tubulaire en CFC situé à l'intérieur (2) est recouvert d'une couche en caoutchouc (3) sur la face externe au niveau de la zone de contact avec le corps tubulaire en CFC extérieur (1) et est donc disposé entre le corps tubulaire en CFC à l'intérieur (2) et l'intérieur du corps tubulaire en CFC situé à l'extérieur avec un effet de séparation, de protection et d'amortissement.
